(19) Europäisches Patentamt
European Patent Office
Office européen des brevets

(11) Veröffentlichungsnummer : **0 437 732 B1**

(12) # EUROPÄISCHE PATENTSCHRIFT

(45) Veröffentlichungstag der Patentschrift : **03.11.93 Patentblatt 93/44**

(51) Int. Cl.$^5$ : **C08G 73/10**

(21) Anmeldenummer : **90123846.9**

(22) Anmeldetag : **11.12.90**

(54) **Verfahren zur Herstellung von Polyamidsäuren und Polyimiden.**

(30) Priorität : **19.01.90 DE 4001445**

(43) Veröffentlichungstag der Anmeldung : **24.07.91 Patentblatt 91/30**

(45) Bekanntmachung des Hinweises auf die Patenterteilung : **03.11.93 Patentblatt 93/44**

(84) Benannte Vertragsstaaten : **AT BE CH DE ES FR GB IT LI NL SE**

(56) Entgegenhaltungen : **DE-A- 1 745 180** **US-A- 4 098 800**

(73) Patentinhaber : **BASF Lacke + Farben AG**
**Glasuritstrasse 1**
**D-48165 Münster-Hiltrup (DE)**

(72) Erfinder : **Blum, Rainer**
**Bannwasserstrasse 58**
**W-6700 Ludwigshafen (DE)**
Erfinder : **Heller, Hans Joachim, Dr.**
**Blankeneser Hauptstrasse 62**
**W-2000 Hamburg 55 (DE)**

(74) Vertreter : **Langfinger, Klaus-Dieter, Dr. et al**
**BASF Aktiengesellschaft, Patentabteilung**
**ZDX - C 6**
**D-67056 Ludwigshafen (DE)**

**EP 0 437 732 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein neues Verfahren zur Herstellung von Polyamidsäuren und davon abgeleiteten Polyimiden, sowie die nach dem Verfahren erhältlichen Polyamidsäuren.

Polyamidsäuren (PAS) gewinnen steigende Bedeutung als lösliche Vorstufen allgemein unlöslicher und schwerschmelzbarer Polyimide (PI).

Polyimide finden vielseitige Verwendung als hochtemperaturbeständige Beschichtungsstoffe z.B. in der Elektrotechnik, zum Lackieren von Wickeldrähten, in der Elektronik zum Beschichten und Strukturieren von Leiterplatten und Verkleben von Bauteilen, in der Mikroelektronik als Isolationsstoffe in den Feinstrukturen und als Schutzabdeckung derselben und zum Beschichten von Glasfasern für Lichtwellenleiter. Die Verarbeitung erfolgt in Form der löslichen Vorstufen (PAS), z.B. durch Tränken von Laminaten oder Applizieren von Schichten auf Oberflächen. Nach dem Verdampfen der Lösungsmittel wird dann in situ, im allgemeinen durch Erhitzen, die PAS in die gewünschte PI-Endform gebracht.

Bei gängigen Verfahren zur Herstellung der PAS werden ein Tetracarbonsäuredianhydrid (TCA) und ein Diamin in hochpolaren Lösungsmitteln, z.B. Dimethylformamid oder N-Methylpyrrolidon (NMP) in Lösung gebracht und unter geeigneten Reaktionsbedingungen unter Zusatz üblicher Hilfsstoffe, wie Katalysatoren für die Anhydridringöffnung umgesetzt. Die bei der Umsetzung entstandenen PAS bleiben in Lösung. Diese Lösungen sind nur begrenzt lagerstabil, da sie zur Selbstverseifung neigen. Daraus ergibt sich der Wunsch, lagerstabilere PAS-Pulver herzustellen. Diese werden durch Ausfällen von PAS aus den Lösungen mit großen Mengen Nichtlösungsmittel erhalten. Die Nachteile dieser Verfahrensweise bestehen in den hohen Kosten und der großen Menge anfallender verunreinigter Lösungsmittel.

Wünschenswert ist daher die Durchführung der Polyaddition in einem Lösungsmittel, in welchem sich die entstehende Polyamidsäure nur bis zu einem begrenzten Polymerisationsgrad löst. Die Verwendung eines solchen Lösungsmittels führt zu einer Fällungspolymerisation, wobei das Endprodukt direkt in Pulverform anfällt oder aber Dispersionen bzw. Emulsionen des noch kolloidal gelösten Endprodukts entstehen.

Fällungspolymerisationen weisen gegenüber Polymerisationen in Lösung darüber hinaus den prinzipiellen Vorteil auf, daß das ausgefallene Polymer nicht weiter polymerisiert und so über die Auswahl des Lösungsmittels der Polymerisationsgrad und somit das Molekulargewicht regulierbar wird.

Die außerordentlich geringe Löslichkeit der Polyamidsäuren in vielen Lösungsmitteln geringerer Polarität im Vergleich zum Dimethylformamid bzw. N-Methylpyrrolidon verhindert eine praktische Anwendung der Fällungspolymerisation, da die entstehende Polyamidsäure schon bei sehr geringen Polymerisationsgraden aus der Lösung ausfällt und nicht verwertbare Produkte entstehen.

In der US-A-3 991 004 wird die Synthese von Polyetherimiden aus Tetracarbonsäureanhydriden der allgemeinen Struktur

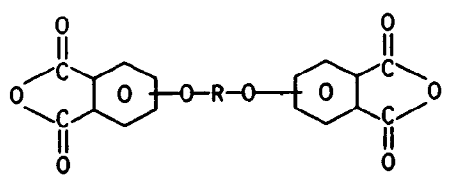

I

und Diaminen in inerten organischen Lösemitteln bei Temperaturen von 130°C - 300°C beschrieben. Als Lösungsmittel werden di- bzw. trichlorierte Benzole und Diphenylether und geringe Mengen Schleppmittel für Wasser, z.B. Toluol, benutzt. Die Reaktion führt direkt zum Polyetherimid.

Nach den US-A-4 098 800 und US-A-4 197 396 werden Polyetheramidsäuren aus Tetracarbonsäureanhydriden der Formel I, gegebenenfalls im Gemisch mit bis zu 30 Mol.-% Benzophenontetracarbonsäuredianhydrid in Methylenchlorid, bzw. Chloroform, 1,2-Dichlorethan oder Mischungen dieser chlorierten Kohlenwasserstoffe mit Aceton hergestellt, wobei Aceton als Lösungsmittel für die Diaminkomponente eingesetzt wird. Eine Umsetzung des Diamins mit dem Lösungsmittel Aceton zum Halbaminal des Diamins findet unter den Bedingungen nur im untergeordneten Ausmaß statt. Die Polyamidsäure ist in diesen chlorierten Kohlenwasserstoffen unlöslich und fällt daher bei der Reaktion in Pulverform aus.

Die Herstellung von PI-Lösungen aus gelösten Polyamidsäuren wird in DE 21 59 935 beschrieben. Zur gelösten Polyamidsäure wird ein Schleppmittel zugesetzt, welches mit Wasser Azeotrope bildet, und das bei der Imidierung freiwerdende Wasser durch Abdestillieren des Azeotrops entfernt. In analoger Weise wird in EP 00 68 246 bei in dipolaren aprotischen Lösemitteln gelösten Polyamidsäuren verfahren. Nach Zugabe des Schleppmittels und Abdestillieren des Azeotrops fallen die Polyimide in Pulverform an.

Der vorliegenden Erfindung liegt daher die folgende Aufgabe zugrunde, ein Herstellverfahren für Polyamidsäuren, bei dem Polyamidsäurepulver durch eine Fällungspolymerisation, möglichst unter gänzlichem Verzicht auf teure und toxische Lösungsmittel, erhältlich werden, zur Verfügung zu stellen. Die direkte weitere Umsetzung der entstandenen Polyamidsäure zum Polyimid sollte weiterhin möglich sein.

Demgemäß wurde ein neues Verfahren zur Herstellung von Polyamidsäuren und davon abgeleiteten Polyimiden gefunden, wobei Tetracarbonsäuredianhydride mit Diaminen, die zumindest zu 10 % in der Halbaminalform vorliegen, zur Polyamidsäure umgesetzt werden. Bevorzugte Ausführungsformen des Verfahrens sind den Unteransprüchen zu entnehmen.

Die Reaktion zwischen dem Diamin, welches zu mindestens 10 % in der Halbaminalform vorliegt und dem Tetracarbonsäuredianhydrid führt sowohl in bisher üblichen polaren Lösungsmitteln wie Dimethylformamid und N-Methylpyrrolidon als auch in weniger polaren Lösungsmitteln bzw. Lösungsmittelgemischen zur Polyamidsäure.

Nach dem erfindungsgemäßen Verfahren sind Polyamidsäuren oder Lösungen von Polyamidsäuren erhältlich, bei denen zumindest 1 % der Kettenenden in der Halbaminalform vorliegen.

Es wurde überraschend gefunden, daß bei Einsatz eines Diamins, welches zu mindestens 10 % in der Halbaminalform vorliegt, die Reaktion mit Tetracarbonsäuredianhydriden in preisgünstigen gängigen und nicht toxischen Lösungsmitteln geringerer Polarität durchgeführt werden kann und Polyamidsäuren mit ausreichendem Polymerisationsgrad und daher guten Verarbeitungseigenschaften erhalten werden. Je nach Polarität des Lösungsmittels fallen die Polyamidsäuren in Pulverform an oder liegen gelöst vor.

Bei der Umsetzung zwischen Diamin, welches nicht in der Halbaminalform vorliegt, und Tetracarbonsäuredianhydrid werden in Lösungsmitteln geringerer Polarität nur Polymerisate mit einem äußerst geringen Polymerisationsgrad erhalten. Diese als Niederschlag anfallenden Polymerisate können aufgrund ihrer mangelnden Verarbeitungseigenschaften keine Verwendung finden.

Der Vorteil einer Fällungspolymerisation, zu der es bei Verwendung von Lösungsmittelgemischen geringerer Polarität als Dimethylformamid oder N-Methylpyrrolidon kommt, besteht darin, daß lagerstabile Polyamidsäurepulver erhalten werden. Darüber hinaus kann bei einer Fällungspolymerisation das Molekulargewicht über die Polarität des Lösemittels reguliert werden, da das ausgefallene Polymer nicht weiter polymerisiert.

Nach dem erfindungsgemäßen Verfahren hergestellte Polyamidsäurelösungen zeichnen sich durch eine gute Lagerstabilität aus.

Die Polyamidsäuren können unabhängig davon,ob sie in Lösung vorliegen oder in Pulverform anfallen, in das Polyimid überführt werden.

Die Umsetzung eines Amins zum Halbaminal ist dem Fachmann bekannt und in vielen Lehrbüchern der organischen Chemie beschrieben. Die Halbaminalbildung aus einer Carbonylgruppe und einem Amin erfolgt gegebenenfalls in Gegenwart katalytischer Mengen Säure, z.B. Phthalsäure, Isophthalsäure, Maleinsäure, Oxalsäure etc.. Bei Aminen ausreichender Basizität kann auf einen Säurezusatz verzichtet werden.

Beim erfindungsgemäßen Verfahren kann das Halbaminal eines Diamins durch Umsetzung des Diamins mit einem carbonylgruppenhaltigen Lösungsmittel, gegebenenfalls in Gegenwart von Säure, erhalten werden. Als carbonylgruppenhaltige Verbindungen, mit denen das Diamin umgesetzt wird, kommen vorzugsweise $C_1$- bis $C_{15}$-Ketone oder -Aldehyde, z.B. Cyclopentanon, Acetaldehyd, Benzaldehyd, Salicylaldehyd, Propargylaldehyd, Crotonaldehyd, Acetylaceton, Cyclohexenon, Cyclopropanon, Diacetonalkohol, Acetonalkohol in Frage. Für das erfindungsgemäße Herstellverfahren reicht es aus, wenn preisgünstige, niedrig siedende Carbonylverbindungen eingesetzt werden. Ganz besonders bevorzugt sind daher Aldehyde oder Ketone mit 1 bis 8 C-Atomen. Besonders bevorzugt sind Aceton, Propionaldehyd und Cyclohexanon, bzw. deren Mischungen.

Die Carbonylverbindung kann als alleiniges Lösungsmittel dienen, es können aber auch Lösungsmittelgemische von carbonylgruppenhaltigen Lösungsmitteln oder Lösungsmittelgemische, die zumindest eine Carbonylverbindung als Lösungsmittelbestandteil oder in gelöster Form enthalten, eingesetzt werden. Im Falle eines Lösungsmittelgemisches sollte die Lösung, bezogen auf 1 Mol eingesetztes Diamin, zumindest 0,2 Mol, bevorzugt zumindest 0,5 Mol, ganz besonders bevorzugt zumindest 0,8 Mol einer Carbonylverbindung enthalten.

Nach der Umsetzung des Diamins mit der Carbonylverbindung erhält man eine Lösung, welche neben nicht umgesetztem Diamin, Halbaminale des Diamins enthält. Das Diamin liegt mindestens zu 10 %, bevorzugt mindestens zu 30 %, ganz besonders bevorzugt mindestens zu 50 % in der Halbaminalform vor.

Die Konzentration des eingesetzten Diamins kann 1 bis 50 Gew.-% betragen, bevorzugt ist sie 5 bis 30 Gew.-%, bezogen auf die Lösung.

Die vorstehend beschriebene Reaktionslösung kann dann direkt zur weiteren Reaktion mit dem gelösten oder suspendierten Tetracarbonsäuredianhydrid eingesetzt werden. Die Lösung des Tetracarbonsäurdianhydrids enthält ca. 2 bis 40 Gew.-%, bevorzugt 10 bis 30 Gew.-% des Tetracarbonsäuredianhydrids, bezogen auf die

Lösung. Das Tetracarbonsäuredianhydrid kann in dem gleichen Lösungsmittel wie das Halbaminal vorliegen. Als Lösungsmittel bzw. Suspensionsmittel für das Tetracarbonsäuredianhydrid kommen aber auch andere carbonylgruppenhaltige oder auch nicht carbonylgruppenhaltige Lösungsmittel, sowie Gemische aus diesen Lösungsmitteln in Frage. Die Polarität der Reaktionslösung, welche das Halbaminal und das Tetracarbonsäuredianhydrid enthält, ergibt sich aus der Polarität der Halbaminallösung und der Polarität des Lösungs- bzw. Suspensionsmittels für das Tetracarbonsäuredianhydrid. Durch Wahl der Lösungsmittel bzw. Lösemittelgemische für das Halbaminal und das Tetracarbonsäuredianhydrid kann daher die Löslichkeit der entstehenden Polyamidsäure und der Polymerisationsgrad, bei dem es zu einer Fällungspolymerisation kommt, beeinflußt werden. Für das Tetracarbonsäuredianhydrid können daher je nach gewünschter Löslichkeit und Polymerisationsgrad hochpolare Lösungsmittel wie Dimethylformamid oder N-Methylpyrrolidon, völlig unpolare Lösungsmittel wie Toluol, Xylol etc. oder auch Lösungsmittel abgestufter Polarität eingesetzt werden. Als Lösungsmittel für das Tetracarbonsäuredianhydrid bzw. als Lösungsmittelzusätze für die Lösung des Tetracarbonsäuredianhydrids oder die Lösung des Diamins kommen eine Vielzahl von Verbindungen in Frage.

Als Beispiele seien hier genannt Aceton, Methylethylketon, Diethylether, Dibutylether, Tetrahydrofuran, Dioxan, Diethylketon, Amylketon, Benzalaceton, Benzol, Xylol, Toluol, Cumol und Ethylbenzol.

Es kommen auch halogenierte Lösungsmittel in Frage, wie Chloroform, Methylenchlorid, Tetrachlorkohlenstoff, Dichlorethan, Chlorbenzole, Fluorkohlenwasserstoffe und polychlorierte Biphenyle.

Auch Lösungsmittel höherer Polarität können zugesetzt werden. In Frage kommen z.B. Lösungsmittel aus der Klasse der Amide, Lactone und Lactame, wie z.B. Butyrolacton, Valerolacton, Caprolacton, Pyrrolidon, N-Methylpyrrolidon, Caprolactam, N-Methylcaprolactam, verschiedene substituierte Harnstoffe, Acetamid, Formamid, N-Alkylacetamide und -formamide, Hexamethylphosphorsäureamid, Dimethylsulfoxid, Dimethylsulfon, Diethylsulfon, Trimethylensulfon.

Eine Zwischenstellung, was das Lösevermögen betrifft, nehmen einige Ketone wie Cyclopentanon, Cyclohexanon, Cycloheptanon, Alkylcyclohexanone, Acetophenon und Propiophenon ein.

Die Auflistung geeigneter Lösungsmittel ist nicht vollständig und soll nur den Rahmen aufzeigen, aus dem ausgewählt werden kann.

Selbstverständlich können auch Mischungen eingesetzt werden, dabei sind z.B. Mischungen unpolarer Nichtlösungsmittel mit polaren Lösungsmitteln wie Dimethylsulfoxid, Dimethylacetamid, Dimethylformamid, N-Methylpyrrolidon und ähnlichen amidischen Lösungsmitteln für die Herstellung von Fällungspolymerisaten geeignet, da mit diesen Mischungen der Polymerisationsgrad gut eingestellt werden kann.

Eine weitere Möglichkeit zur Durchführung des erfindungsgemäßen Verfahrens besteht darin, das Diamin zusammen mit dem Tetracarbonsäuredianhydrid gegebenenfalls in Gegenwart von Säure in einem geeigneten Lösungsmittel bzw. Lösungsmittelgemisch vorzulegen. Die Umsetzung zum Halbaminal und weitere Reaktion zur Polyamidsäure erfolgt dann in einem Schritt. Das Lösungsmittelgemisch muß auch in diesem Fall mindestens einen Lösungsmittelbestandteil aufweisen, der eine Carbonylgruppe trägt, oder eine Carbonylverbindung gelöst enthalten. Die Auswahl des Lösungsmittels, bzw. Lösungsmittelgemischs für die Durchführung des Verfahrens in einem Schritt ergibt sich aus der dargelegten Wahl des Lösungsmittels, bzw. Lösungsmittelgemischs für das Diamin und das Tetracarbonsäuredianhydrid. Die Konzentrationen des vorgelegten Diamins, Tetracarbonsäuredianhydrid und der Carbonylverbindung entsprechen den Konzentrationen, die sich bei Durchführung des Verfahrens in zwei Stufen nach Zugabe der das Halbaminal enthaltenden Lösung zum gelösten oder suspendierten Tetracarbonsäuredianhydrid ergeben.

Dem Fachmann ist bekannt, daß die Reaktion einer Carbonylverbindung mit einem Amin in Gegenwart von Säure über eine Halbaminalbildung direkt oder in einer 2. Reaktionsstufe unter Wasserabspaltung zum Aldimin bzw. Ketimin führt. Im Gegensatz zum Halbaminal ist das Aldimin (Ketimin) aus der Reaktionslösung gut isolierbar. Eine Verfahrensvariante im Sinne der beschriebenen Erfindung ist es daher, die Umsetzung zwischen Carbonylverbindung und Diamin bis zur Stufe des Aldimins (Ketimins) zu führen, dieses aus der Reaktionslösung zu isolieren und unter Zugabe geringer Mengen Wasser und gegebenenfalls geringer Mengen Säure mit dem Tetracarbonsäuredianhydrid in einem geeigneten Lösungsmittel zur Reaktion zu bringen.

Die Anwendung des Verfahrens ist nicht auf bestimmte Diamine bzw. Stoffklassen der Diamine beschränkt. Die Diamine neigen jedoch unterschiedlich stark zur Halbaminalbildung, so daß bei einigen Diaminen der Zusatz von Säure, z.B. Phthalsäure, Isophthalsäure als Katalysator notwendig wird.

Die folgende Aufzählung zeigt nur eine Auswahl möglicher Diaminverbindungen:

4,4'-Diaminodiphenyloxid, 4,4'-Methylen-di(o-chlor)-anilin, 3,3'-Dichlorbenzidin, 3,3'-Dimethylbenzidin, 3,3'-Dimethoxibenzidin, 3,3'-Sulfonyldianilin, 4,4'-Diaminobenzophenon, 1,5-Diaminonaphthalin, Di-(4-aminophenyl)-dimethylsilan, Di-(4-aminophenyl)-diethylsilan, Di-(4-aminophenyl)-diphenylsilan, Di-(4-aminophenoxy)-dimethylsilan, Di-(4-aminophenyl)-ethylphosphinoxid, Di-(p-β-amino-t-butylphenyl)ether, N-(Di-(4-aminophenyl))-N-methylamin, N-(di-(4-aminophenyl))-N-phenylamin, 4,4'-Methylen-Di(3-methylanilin), 4,4'-Methylen-di(3-ethylanilin), 4,4'-Methylen-di(3-methoxyanilin), 5,5'-Oxidi-(2-aminophenol), 4,4'-Thiodi-(2-chloranilin), 4,4'Thiodi-(2-methylanilin), 4,4'-Thiodi-(2-methoxyanilin), 4,4'-Sulfonyldi-(2-ethoxyanilin), 4,4'-Thiodi-(2-chloranilin), 5,5'-Sulfonyldi(2-aminophenol), 3,3'-Dimethyl-4,4'-diaminobenzophenon, 3,3'-Dimethoxy-4,4'-diaminobenzophenon, 3,3'-Dichlor-4,4'-diaminobenzophenon, Diaminobenzophenon, 4,4'-Diaminobiphenyl, m-Phenylendiamin, p-Phenylendiamin, m-Xylylendiamin, p-Xylylendiamin, 2,4-Diaminotoluol, 2,6-Diaminotoluol, 4,4'-Diaminodiphenylmethan, 4,4'-Oxydianilin, 4,4'-Thiodianilin, 4,4'-Sulfonyldianilin, 4,4'-Isopropylendianilin, 3,3'-Dicarboxybenzidin, Diaminotoluol, 1,5-Diaminonaphthalen sowie die Isomeren dieser Amine. Weiter kommen auch aliphatische heterocyklische und cykloaliphatische Amine in Frage, wie z.B. Ethylendiamin, Propylendiamin, Diaminobutan, Diaminopentan, Hexamethylendiamin, Di-(4-aminocyclohexyl)methan, Di-(4-aminocyclohexyl)oxid, Di-(4-aminocyclohexyl)isopropan, Di-(4-aminocyclohexyl)sulfid, Di-(4-aminocyclohexan)sulfon, Cyklohexandiamin, Di-(3-aminopropyl)sulfid, Di-(3-aminopropyl)tetramethyldisiloxan, Di-(3-aminopropyl)tetramethyldisiloxan, Di-(3-aminobutyl)-tetramethyldisiloxan, sowie die Isomeren dieser Diamine. Es können auch Mischungen von Diaminen, sowie geeignete Oligomere oder Polymere Diaminverbindungen eingesetzt werden.

Bevorzugte Diaminverbindungen sind 4,4'-Diaminodiphenyloxid, 3,3'-Dimethylbenzidin, 3,3'-Dimethoxibenzidin, 4,4'-Diaminobenzophenon, 4,4'-Diaminobiphenyl und 4,4'-Isopropylendianilin, Diaminotoluole und 4,4'-Diaminodiphenylmethan.

Tetracarbonsäuredianhydride, die eingesetzt werden können, sind z.B. Dianhydride folgender Tetracarbonsäuren:

2,3,9,10-Perylentetracarbonsäure, 1,4,5,8-Naphthalintetracaronsäure, 2,6-Dichlornaphthalin-1,4,5,8-tetracarbonsäure, 2,7-Dichlornaphthalin-1,4,5,8-tetracarbonsäure, Phenanthren-1,8,9,10-tetracarbonsäure, Pyromellitsäure, 3,3',4,4'-Diphenyltetracarbonsäure, 2,2',4,4'-Diphenyltetracarbonsäure, 4,4'-Isopropylidendiphthalsäure, 3,3'-Propylidendiphthalsäure, 4,4'-Oxydiphthalsäure, 4,4'-Sulfonyldiphthalsäure, 3,3'-Oxydiphthalsäure, Di(Dicarboxydihydroxyphenyl)methane, Di-[Diaminodicarboxyphenyl)-methane, Di(Dicarboxyldihydroxiphenyl)-oxide, Di-(Diaminodicarboxylphenyl)-oxide, Di-(Dicarboxyldihydroyphenyl)-sulfone, Di-(Diaminodicarboxylphenyl)-sulfoxide, 4,4'-Methylendiphthalsäure, 4,4'-Thiodiphthalsäure, 4,4'-Acetylidendiphthalsäure, 2,3,6,7-Naphthalintetracarbonsäure, 1,2,4,5-Naphthalintetracarbonsäure, 1,2,3,5-Naphthalintetracarbonsäure, Benzol-1,2,3,4-tetracarbonsäure, 1-(3',4-Dicarboxyphenyl)-1,3,3-trimethylindan-5,6-dicarbonsäure, 1-(3',4'-Dicarboxyphenyl)-1,3,3-trimethylindan-6,7-dicarbonsäure, Pyrazin-2,3,5,6-tetracarbonsäure, Tetrahydrofurantetracarbonsäure, 9-Brom-10-mercaptoanthracentetracarbonsäure, 9,10-Dimercaptoanthracentetra-carbonsäure, Butantetracarbonsäure, Benzophenontetracarbonsäure sowie Substitutionsprodukte dieser Polycarbonsäuren, insbesondere Halogen und/oder Alkylsubstitutionsprodukte.

Es können auch geeignete oligomere oder polymere Tetracarbonsäuredianhydride eingesetzt werden.

Bevorzugte Tetracarbonsäuredianhydride sind Anhydride folgender Tetracarbonsäuren:

Pyromellitsäure, 3,3',4,4'-Diphenyltetracarbonsäure, 2,2',4,4'-Diphenyltetracarbonsäure, Di(dicarboxydihydroxyphenyl)methane, Benzophenontetracarbonsäure.

Das erfindungsgemäße Verfahren beschränkt sich dabei nicht nur auf die Verwendung der genannten Tetracarbonsäuredianhydride, die Liste soll lediglich verdeutlichen, welcher Art die Stoffe sind, die eingesetzt werden können. Es können auch Mischungen von Tetracarbonsäuredianhydriden eingesetzt werden.

Bevorzugt ist mindestens eine der eingesetzten Tetracarbonsäureanhydride und/oder mindestens eins der eingesetzten Diamine eine aromatische Verbindung. Besonders bevorzugt sind sowohl die eingesetzten Tetracarbonsäuredianhydride als auch die eingesetzten Diamine aromatische Verbindungen.

Bei der Durchführung der Umsetzung zwischen dem Diamin, welches zu mindestens 10 % in der Halbaminalform vorliegt und dem Tetracarbonsäuredianhydrid sollte die Temperatur nicht zu hoch sein. Aus Reaktionen zwischen Diaminen und Tetracarbonsäuredianhydriden ist bekannt, daß bei Temperaturen über 100°C die Polyamidsäure direkt zum Polyimid weiterreagiert. Zur Bildung der Polyamidsäuren reichen moderate Temperaturen um 50°C im allgemeinen aus. Katalysatoren, welche bei der Polyamidsäurebildung aus einem Diamin und einem Tetracarbonsäuredianhydrid gegebenenfalls eingesetzt werden, können auch bei der Reaktion zwischen dem Diamin, welche zu mindestens 10 % in der Halbaminalform vorliegt und Tetracarbonsäuredianhydrid Verwendung finden. Es handelt sich dabei z.B. um tertiäre Amine oder zinnorganische Verbindungen. Die gleichen Katalysatoren werden auch bei der Überführung der Polyamidsäure in Polyimide eingesetzt. In Frage kommen z.B. tert. Amine, metallorganische Verbindungen wie Dibutylzinnlaurat, Zinnoctat, Tetrabutyl-o-titanat, Titanoctylacetonat, substituierte und nichtsubstituierte Imidazole und Benzimidazole.

Zur Regulierung des Molekulargewichtes kommen weiter auch monofunktionelle aliphatische, aromatische, cycloaliphatische, araliphatische, heterocyclische Amine sowie die Monoanhydride aliphatischer, aromatischer, cycloaliphatischer, heterocyclischer und araliphatischer Dicarbonsäuren in stöchiometrisch untergeordneten Mengen zur Verwendung.

Die erhaltenen Polyamidsäuren liegen je nach Wahl der Lösungsmittel gelöst vor, oder fallen in Pulverform an.

Die erhaltenen Polyamidsäuren können statistisch aufgebaut sein oder eine Blockcopolymerstrukur aufweisen. Solche Blockcopolymerstrukturen können erhalten werden durch getrennte Herstellung vorwiegend aminoterminierter oder anhydridterminierter Polyamidsäuren nach dem erfindungsgemäßen Verfahren. Anschließend werden die vorwiegend aminoterminierten Polyamidsäuren mit den vorwiegend anhydridterminierten Polyamidsäuren zu Blockcopolymeren umgesetzt oder chemisch unterschiedliche, vorwiegend aminoterminierte, bzw. chemisch unterschiedliche, vorwiegend anhydridterminierte Polyamidsäuren mit Tetracarbonsäuredianhydriden oder Diaminen zu Blockcopolymeren verknüpft.

Nach dem erfindungsgemäßen Verfahren hergestellte Polyamidsäuren können dabei auch mit nicht nach dem erfindungsgemäßen Verfahren hergestellten Polyamidsäuren verknüpft werden.

Das vorstehend beschriebene Verfahren liefert auf einfache Weise Lösungen von Polyamidsäuren, die sich aufbauen aus Einheiten, die sich ableiten von Tetracarbonsäuredianhydriden und Diaminen, wobei mindestens 1 %, bevorzugt mindestens 3 %, besonders bevorzugt mindestens 10 %, ganz besonders bevorzugt mindestens 20 % der Kettenenden in der Halbaminalform vorliegen.

Die nach dem erfindungsgemäßen Verfahren erhaltenen Polyamidsäuren können vollständig oder teilweise, d.h. bis zum Erreichen eines bestimmten Imidierungsgrads, in die Polyimidendform überführt werden. Je nach Löslichkeit entstehen dabei Pulver oder Lösungen von Polyimiden oder teilimidierten Polyamidsäuren. Die Überführung der Polyamidsäuren in Polyimide kann nach bekannten Verfahren erfolgen, z.B. durch thermische Imidierung oder Imidierung in Gegenwart eines Imidierungskatalysators gegebenenfalls bei gleichzeitigem Abdestillieren von entstehendem Reaktionswasser.

Der Imidierungsgrad gewünschter teilimidierter Polyamidsäuren läßt sich vorteilhaft in Gegenwart von Imidierungskatalysatoren durch Zugabe von Essigsäureanhydrid einstellen.

Die nach dem erfindungsgemäßen Verfahren hergestellten Polyamidsäuren und Polyimide bzw. teilimidisierte Polyamidsäuren können zum Beschichten von Oberflächen verwendet werden.

Die nach dem erfindungsgemäßen Verfahren hergestellten Polyamidsäurepulver, Polyimidpulver und teilimidierten Polyamidsäurepulver können z.B. als Beschichtungsstoffe oder Isolationsstoffe in der Elektronik, Mikroelektronik, Elektrotechnik oder zum Beschichten von Glasfasern verwendet werden.

Ebenso können die nach dem erfindungsgemäßen Verfahren hergestellten Polyamidsäurelösungen direkt zur Beschichtung von Oberflächen, z.B. von Bauteilen in der Elektronik, Mikroelektronik oder Elektrotechnik, zum Beschichten von Glasfasern als Isolations-, Strukturierungs- oder Füllmaterial Verwendung finden. Gleiches gilt auch für Polyimidlösungen und Lösungen teilimidierter Polyamidsäuren.

Die vorliegenden Beispiele sollen die Erfindung verdeutlichen, ohne sie jedoch auf diese Beispiele einzuschränken.

Erfindungsgemäß einzusetzendes Umsetzungsprodukt (U1):

198 g (1Mol) 4,4'-Diaminodiphenylmethan (DADM)
1800 g Aceton und
2 g Phthalsäure

wurden bei 50°C 2 Stunden gerührt. Es entstand eine bräunlichviolette Lösung des Halbaminals des Diaminodiphenylmethans, neben nicht umgesetztem Diaminodiphenylmethan, in Aceton. Durch FT-IR Vergleichsspektren wurde ein Umsatz zum Halbaminal von ca. 80 % bestimmt.

Erfindungsgemäß einzusetzendes Umsetzungsprodukt (U2):

200 g (1 Mol) 4,4'-Diaminodiphenyloxid (DADO)
1800 g Aceton und
2 g Phthalsäure

wurden bei 50°C 2 Stunden gerührt, es entstand eine bräunlichviolette Lösung des Halbaminals des Diaminodiphenyloxids, neben nicht umgesetztem Diaminodiphenyloxid, in Aceton. Durch FT-IR Vergleichsspektren wurde ein Umsatz zum Halbaminal von 80 % bestimmt.

Erfindungsgemäß einzusetzendes Umsetzungsprodukt (U3)

200 g (1 Mol) 4,4'-Diaminodiphenyloxid
137 g (2,2 Mol) Propionaldehyd
1663 g Essigester und
2 g Phthalsäure

wurden bei 50°C 2 Stunden gerührt, es entstand eine braune Lösung des Halbaminals des Diaminodiphenyloxids mit Propionaldehyd. Durch FT-IR Vergleichsspektren wurde ein Umsatz zum Halbaminal von 70 % bestimmt.

Nicht erfindungsgemäße Lösung (L1)

198g (1 Mol) 4,4'-Diaminodiphenylmethan
1800 g Aceton

wurden bei 50°C 2 Stunden gerührt, es entstand eine hellbraune Lösung, aus der sich nach dem Abkühlen ein

Niederschlag des Diamins bildete. Das Diaminodiphenylmethan hat nur in untergeordneten Mengen mit Aceton zum Halbaminal reagiert. Durch FT-IR Spektren wurde ein Umsatz zum Halbaminal < 5 % bestimmt.

Nicht erfindungsgemäße Lösung (L2)

| | |
|---|---|
| 200 g | (1 Mol) 4,4'-Diaminodiphenyloxid |
| 1800 g | Aceton |

wurden bei 50°C 2 Stunden gerührt, es entstand eine hellbraune Lösung, aus der sich nach dem Abkühlen ein Niederschlag des Diamins bildete. Das Diaminodiphenyloxid hat nur in untergeordneten Mengen mit Aceton zum Halbaminal reagiert. Durch FT-IR Vergleichsspektren wurde ein Umsatz zum Halbaminal < 5 % bestimmt.

Beispiel 1 (B1)

Erfindungsgemäßes Verfahren zur Herstellung eines Polyamidsäurepulvers.

In einer Rührapparatur mit Thermometer, Rückflußkühler und Tropfrichter wurden

| | |
|---|---|
| 218 g | (1 Mol) Pyromellithsäuredianhydrid (PMDA) in |
| 1800 g | Cyclohexanon bei 50°C unter Rühren gelöst, es wurden |
| 3 g | Tributylamin zugefügt und in einer Stunde bei 50 bis 55°C |
| 2000 g | der Lösung U 1 zugegeben. |

Nach etwa zwei Drittel des Zulaufs begann sich ein feinteiliger gelber Niederschlag abzuscheiden. Es wurde eine Stunde bei 55°C weitergerührt, der Niederschlag wurde dabei etwas grobkörniger, dann wurde abgekühlt, der Niederschlag abgenutscht und getrocknet. Es wurde ein grobkörniges, bräunliches Pulver erhalten, dessen IR-Spektrum mit dem literaturbekannten IR-Spektrum der Polyamidsäure aus PMDA mit DADM übereinstimmt.

Das Pulver war in N-Methylpyrrolidon löslich, seine Grenzviskosität (intrinsic viscosity) gemessen in N-Methylpyrrolidon betrug 0,44 dl/g.

Beispiel 2 (B2)

Erfindungsgemäßes Verfahren zur Herstellung eines Polyamidsäurepulvers.

In einer Rührapparatur mit Thermometer, Rückflußkühler und Tropftrichter wurden

| | |
|---|---|
| 218 g | (1 Mol) Pyromellithsäuredianhydrid (PMDA) in |
| 1800 g | Aceton bei 50°C unter Rühren gelöst, es wurden |
| 3 g | Tributylamin zugefügt und in einer Stunde bei 50 bis 55°C |
| 2002 g | der Lösung U 2 zugegeben. |

Nach etwa einem Drittel des Zulaufs begann sich ein feinteiliger gelber Niederschlag abzuscheiden. Es wurde eine Stunde bei 55°C weitergerührt, dann wurde abgekühlt, der Niederschlag abgenutscht und getrocknet. Es wurde ein feines gelbes Pulver erhalten, dessen IR-Spektrum mit dem literaturbekannten IR-Spektrum der Polyamidsäure aus PMDA mit DADO übereinstimmte.

Das Pulver war in N-Methylpyrrolidon löslich, seine Grenzviskosität (intinsic viscosity) gemessen in N-Methylpyrrolidon betrug 0,29 dl/g.

Beispiel 3 (B3)

Erfindungsgemäßes Verfahren zur Herstellung eines Polyimidpulvers.

In einer Rührapparatur mit Thermometer, Rückflußkühler und Tropfrichter wurden

| | |
|---|---|
| 218 g | 1 Mol) Pyromellithsäuredianhydrid (PMDA) in |
| 1800 g | Aceton bei 50°C unter Rühren gelöst, es wurden |
| 3 g | Tributylamin zugefügt und in einer Stunde bei 40 bis 55°C |
| 2002 g | der Lösung U 2 zugegeben. |

Nach etwa einem Drittel des Zulaufs begann sich ein feinteiliger gelber Niederschlag abzuscheiden. Es wurde eine Stunde bei 55°C weitergerührt, dann wurde ein Destillierbogen anstelle des Rückflußkühlers aufgesetzt und zunächst 2200 g Aceton abdestilliert. Dann wurde über den Tropftrichter Toluol im gleichen Maße nachgegeben wie über die Destillation Lösemittel entfernt wurde, dabei wurde die Mischung durch Erhöhen der Temperatur am Sieden gehalten. Es wurde solange so verfahren, bis die Siedetemperatur des Toluols in der Apparatur erreicht ist. Es wurden

| | |
|---|---|
| 3 g | Dibutylzinndilaurat zugegeben, der Destillierbogen durch einen Wasserauskreiser ersetzt und in 3 Stunden |
| 32 g | Wasser ausgekreist. Nach dem Abkühlen wurde der Niederschlag abgenutscht, mit Aceton nachgewaschen und getrocknet. Es resultierte ein feines braungelbes Pulver, dessen IR-Spektrum mit dem |

literaturbekannten IR-Spektrum des Polyimids aus PMDA mit DADO übereinstimmte.

Beispiel 4 (B4)

Erfindungsgemäßes Verfahren zur Herstellung einer Polyamidsäurelösung.

In einer Rührapparatur mit Thermometer, Rückflußkühler und Tropfrichter wurden

| | |
|---|---|
| 218 g | 1 Mol) Pyromellithsäuredianhydrid (PMDA) in |
| 800 g | N-Methylpyrrolidon bei 50°C unter Rühren gelöst |
| 3 g | Tributylamin zugefügt und in einer Stunde bei 40 bis 55°C |
| 2002 g | (U1) der Lösung U 1 zugegeben. |

Es wurde eine braune viskose Lösung erhalten. Das IR-Spektrum zeigte neben den für eine Polyamidsäure aus PMDA und DADM bekannten Banden auch für eine Halbaminalbindung charakteristische Bande. Eine Probe dieser Lösung wurde auf einem KBr-Preßling in dünnem Film bei 80°C eine Stunde im Vakuum getrocknet, das IR-Spektrum stimmte dann mit dem literaturbekannten IR-Spektrum der Polyamidsäure aus PMDA mit DADM überein.

Die Grenzviskosität (intrinsic viscosity) des Polymeren gemessen in N-Methylpyrrolidon betrug 0,22 dl/g).

Beispiel 5 (B5)

Erfindungsgemäßes Verfahren zur Herstellung eines Polyamidsäurepulvers.

In einer Rührapparatur mit Thermometer, Rückflußkühler und Tropfrichter wurden

| | |
|---|---|
| 218 g | (1 Mol) Pyromellithsäuredianhydrid (PMDA) in |
| 1800 g | Xylol bei 50°C unter Rühren gelöst, |
| 3 g | Tributylamin zugefügt und in einer Stunde bei 50 bis 55°C |
| 2002 g | der Lösung U 3 zugegeben. |

Nach etwa einem Drittel des Zulaufs begann sich ein feinteiliger gelber Niederschlag abzuscheiden. Es wurde eine Stunde bei 55°C weitergerührt, dann wurde abgekühlt und der Niederschlag abgenutscht und getrocknet. Es wurde ein feines gelbes Pulver erhalten, dessen IR-Spektrum mit dem literaturbekannten IR-Spektrum der Polyamidsäure aus PMDA mit DADO übereinstimmt. Das Pulver war in N-Methylpyrrolidon löslich, seine Grenzviskosität (intrinsic viscosity) gemessen in N-Methylpyrrolidon betrug 0,34 dl/g.

Vergleichsbeispiel 1 (V1)

Es wurde wie in Beispiel 1 verfahren, aber anstelle von (U1) wurde (L1) eingesetzt, wobei das Diamin in einem beheizten Zulauf in Lösung gehalten wurde.

Die Grenzviskosität der entstandenen Polyamidsäure betrug 0,03 dl/g.

Vergleichsbeispiel 2 (V2)

Es wurde wie in Beispiel 2 verfahren, aber anstelle von U2 wurde (L2) eingesetzt, wobei das Diamin in einem beheizten Zulauf in Lösung gehalten wurde. Die Grenzviskosität der entstandenen Polyamidsäure betrug 0,04 dl/g.

Vergleichsbeispiel 3 (V3)

Es wurde wie bei Beispiel 4 verfahren, aber anstelle von (U1) wurde (L1), die in einem beheizten Zulauf in Lösung gehalten wurde, eingesetzt.

Es wurde eine braune Lösung mit hohem Anteil an Niederschlag erhalten. Nach Zugabe von weiteren 800 g N-Methylpyrrolidon wurde eine klare Lösung erhalten.

Eine Probe dieser Lösung wurde auf einem KBr-Preßling in dünnem Film bei 80°C eine Stunde im Vakuum getrocknet, das IR-Spektrum stimmt mit dem literaturbekannten IR-Spektrum der Polyamidsäure aus PMDA mit DADM überein.

Die Grenzviskosität (intrinsic viscosität) des Polymeren gemessen in N-Methylpyrrolidon betrug 0,09 dl/g.

Prüfung des Verfilmungsverhaltens der Polymeren aus den Beispielen:

Die erhaltenen Lösungen, bzw. 20 %ige Lösungen der Pulver in NMP wurden mit einer 0,2 mm - Rakel auf Glasplatten aufgebracht, zunächst 2 Std. bei 80°C im Vakuum vorgetrocknet, dann in 30 Min. auf 350°C hochgeheizt und 30 Min. gehalten. Nach dem Abkühlen wurde die Filmqualität beurteilt.

Tabelle 1

Vergleich der Beispiele:

| | | Visk. [dl/g] | Filmqualität |
|---|---|---|---|
| B1 | erfindungsgemäß | 0,44 | gut, glatt, hellbraun, |
| V1 | nicht erfindungsgemäß | 0,03 | dunkelbraun, bröselig |
| B2 | erfindungsgemäß | 0,29 | gut, glatt, hellbraun |
| V2 | nicht erfindungsgemäß | 0,04 | dunkelbraune Krümel |
| B4 | erfindungsgemäß | 0,22 | gut, glatt, helbbraun |
| V3 | nicht erfindungsgemäß | 0,09 | Filmbildung nur bis < 5 µm möglich, darüber rissig, dunkelbraun. |

Die Grenzviskosität der entstandenen Polyamidsäuren wurde bei 25°C in N-Methylpyrrolidon bestimmt und wird in deziliter (dl)/g angegeben.

Die Beispiele zeigen, daß bei Einsatz eines Halbaminals und eines Tetracarbonsäureanhydrids Polyamidsäuren mit ausreichendem Polymerisationsgrad und guten Verarbeitungseigenschaften z.B. guten Filmqualitäten erhalten werden. Dagegen ergeben sich bei Einsatz eines Diamins, welches nur in untergeordneten Mengen in der Halbaminalform vorliegt, keine verwendbaren Produkte. Wie an der geringen Grenzviskosität zu erkennen ist, wurde nur ein äußerst geringer Polymerisationsgrad erreicht.

Herstellung von Polyamidsäureblockcopolymeren

Die Beispiele 6-9 betreffen die Herstellung vorwiegend aminoterminierter Polyamidsäuren nach dem erfindungsgemäßen Verfahren. Die Aminoendgruppen der erhaltenen Polyamidsäuren liegen unter den Bedingungen des erfindungsgemäßen Verfahrens weitgehend in der Halbaminalform vor.

Beispiel 6

| | |
|---|---|
| 118,90 g | (0,6 Mol) Diaminodiphenylmethan (DADM) |
| 900 g | Aceton |
| 1 g | Phthalsäure wurden in einer üblichen Laborrührapparatur mit Zulauftrichter unter Stickstoff bei 50°C 2 Stunden gerührt, es entstand eine bräunlichviolette Lösung des Halbaminals des Diaminodiphenylmethans, neben nicht umgesetztem Diaminodiphenylmethan, in Aceton. Dazu wurde bei 40°C in einer Stunde eine Lösung von |
| 109 g | (0,5 Mol) Pyromellithsäureanhydrid (PMDA) in |
| 523 g | N-Methylpyrrolidon (NMP) zugegeben, danach wurde ein Destillierbogen aufgesetzt und unter leichtem Vakuum wurden |
| 738,80 g | Lösemittel abdestilliert, das nach GC zu etwa 97 % aus Aceton und zu ca. 3 % NMP aus bestand, es resultierte eine dunkelbraune Harzlösung, die einen Festgehalt von 25 Gew.-% besaß. |

Beispiel 7

Die Verfahrensweise entspricht Beispiel 6.

Einsatzstoffe:

| | |
|---|---|
| 120 g | (0,6 Mol) Diaminodiphenyloxid (DADO) |
| 900 g | Aceton |
| 1 g | Phthalsäure |
| 109 g | (0,5 Mol) Pyromellithsäureanhydrid (PMDA) in |

523 g N-Methylpyrrolidon (NMP)
Nach der Reaktion wurden
737 g Lösemittel abdestilliert, das nach GC zu etwa 97 % aus Aceton und zu ca. 3 % NMP aus bestand, es resultierte eine dunkelbraune Harzlösung, die einen Festgehalt von 25 Gew.-% besaß.

Beispiel 8

Die Verfahrensweise entspricht Beispiel 6.
Einsatzstoffe:
118,90 g (0,6 Mol) Diaminodiphenylmethan (DADM)
700 g Cyclohexanon
200 g NMP
1 g Phthalsäure
109 g (0,5 Mol) Pyromellithsäureanhydrid (PMDA) in
523 g N-methylpyrrolidon (NMP)
Nach der Reaktion wurden
740,30 g Lösemittel abdestilliert, das nach GC zu etwa 86 % aus Cyclohexanon und zu ca. 14 % NMP aus bestand, es resultierte eine dunkelbraune Harzlösung, die einen Festgehalt von 25 Gew.-% besaß.

Beispiel 9

Die Verfahrensweise entspricht Beispiel 6.
Einsatzstoffe:
120 g (0,6 Mol) Diaminodiphenyloxid (DADO)
700 g Cyclohexanon
200 g NMP
1 g Phthalsäure
161 g (0,5 Mol) Benzophenontetracarbonsäuredianhydrid (BPDA) in
650 g N-Methylpyrrolidon (NMP)
Nach der Reaktion wurden
708 g Lösemittel abdestilliert, das nach GC zu etwa 86 % aus Cyclohexanon und zu ca. 14 % NMP aus bestand, es resultierte eine dunkelbraune Harzlösung, die einen Festgehalt von 25 Gew.-% besaß.

Die Beispiele 10 bis 13 betreffen die Herstellung von vorwiegend anhydridterminierten Polyamidsäuren nach dem erfindungsgemäßen Verfahren.

Beispiel 10

99,5 g (0,5 Mol) Diaminodiphenylmethan (DADM)
900 g Aceton und
1 g Phthalsäure wurden in einer üblichen Laborrührapparatur mit Zulauftrichter unter Stickstoff bei 50°C 2 Stunden gerührt, es entstand eine bräunlichviolette Lösung des Halbaminals des Diaminodiphenylmethans, neben nicht umgesetzten Diaminodiphenylmethan in Aceton. Dazu wurde bei 40°C in einer Stunde eine Lösung von
131 g (0,6 Mol) Pyromellithsäureanhydrid (PMDA) in
523 g N-Methylpyrrolidon (NMP) zugegeben, dann wurde eine Destillierbogen aufgesetzt und unter leichtem Vakuum wurden
733 g Lösemittel abdestilliert, das nach GC zu etwa 97 % aus Aceton und zu ca. 3 % NMP bestand, es resultierte eine dunkelbraune Harzlösung, die einen Festgehalt von 25 Gew.-% besaß.

Beispiel 11

Die Verfahrensweise entspricht Beispiel 10.
Einsatzstoffe:
100 g (0,5 Mol) Diaminodiphenyloxidr (DADO)
900 g Aceton
1 g Phthalsäure
131 g (0,6 Mol) Pyromellithsäureanhydrid (PMDA) in

523 g N-Methylpyrrolidon (NMP)

Nach der Reaktion wurden

731 g Lösemittel (ca. 97 % aus Aceton und ca. 3 % NMP) abdestilliert, es entstand eine dunkelbraune Harzlösung, die einen Festgehalt von 25 Gew.-% besaß.

Beispiel 12

Die Verfahrensweise entspricht Beispiel 10.

Einsatzstoffe:

99,5 g (0,5 Mol) Diaminodiphenylmethan (DADM)
700 g Cyclohexanon
200 g NMP
1 g Phthalsäure
131 g (0,6 Mol) Pyromellithsäureanhydrid (PMDA) in
523 g N-Methylpyrrolidon (NMP)

Nach der Reaktion wurden

733 g Lösemittel (ca. 86 % Cyclohexanon und ca. 14 % NMP) abdestilliert, es entstand eine dunkelbraune Polymerlösung, die einen Festgehalt von 25 Gew.-% besaß.

Beispiel 13

Die Verfahrensweise entspricht Beispiel 10.

Einsatzstoffe:

99,5 g (0,5 Mol) Diaminodiphenyloxid (DADO)
700 g Cyclohexanon
200 g NMP
1 g Phthalsäure
193,2 g (0,6 Mol) Benzophenontetracarbonsäuredianhydrid (BPDA) in
570 g N-Methylpyrrolidon (NMP)

Nach der Reaktion wurden

591 g Lösemittel (ca. 84 % Cyclohexanon und ca. 16 % NMP) abdestilliert, es entstand eine dunkelbraune Polymerlösung, die einen Festgehalt von 25 Gew.-% besaß.

Beispiele 14 bis 16 betreffen die Herstellung von vorwiegend aminoterminierten Polyamidsäuren, nicht nach dem erfindungsgemäßen Verfahren.

Beispiel 14

Es wurden

118,9 g DADM (0,6 Mol) und
342 g NMP vorgelegt und
109 g PMDA (0,5 Mol) in
343 g NMP zugegeben, es wurde 2 Stunden bei 50°C gerührt und dann abgekühlt. Es wurde eine braune Harzlösung erhalten die einen Festgehalt von 25 Gew.-% besaß.

Beispiel 15

Es wurden

120 g DADO (0,6 Mol) und
344 g NMP vorgelegt und
109 g PMDA (0,5 Mol) in
343 g NMP zugegeben, es wurde 2 Stunden bei 50°C gerührt und dann abgekühlt. Es wurde eine braune Harzlösung erhalten die einen Festgehalt von 25 Gew.-% besaß.

Beispiel 16

Es wurden

120 g DADO (0,6 Mol) und
422 g NMP vorgelegt und

161 g BPDA (0,5 Mol) in

421 g NMP zugegeben, es wurde 2 Stunden bei 50°C gerührt und dann abgekühlt. Es wurde eine braune Harzlösung erhalten die einen Festgehalt von 25 Gew.-% besaß.

Beispiele 17 bis 19 betreffen die Synthese von vorwiegend anhydridterminierten Polyamidsäuren, nicht nach dem erfindungsgemäßen Verfahren.

Beispiel 17

Es wurden

99,5 g (0,5 Mol) Diaminodiphenylmethan (DADM) und

346 g NMP vorgelegt und

131 g (0,6 Mol) Pyromellithsäuredianhydrid (PMDA) in

345 g N-Methylpyrrolidon (NMP) zugegeben, es wurde 2 Stunden bei 50°C gerührt und dann abgekühlt. Es wurde eine braune Harzlösung erhalten, die einen Festgehalt von 25 Gew.-% besaß.

Beispiel 18

Es wurden

100 g (0,5 Mol) Diaminodiphenyloxid (DADO) und

346 g NMP vorgelegt und

131 g (0,6 Mol) Pyromellithsäuredianhydrid (PMDA) in

347 g N-Methylpyrrolidon (NMP) zugegeben, es wurde 2 Stunden bei 50°C gerührt und dann abgekühlt. Es wurde eine braune Harzlösung erhalten, die einen Festgehalt von 25 Gew.-% besaß.

Beispiel 19

Es wurden

100 g (0,5 Mol) Diaminodiphenyloxid (DADO) und

400 g NMP vorgelegt und

193,2 g (0,6 Mol) Benzophenontetracarbonsäuredianhydrid (BPDA) in

479,6 g N-Methylpyrrolidon (NMP) zugegeben, es wurde 2 Stunden bei 50°C gerührt und dann abgekühlt. Es wurde eine braune Harzlösung erhalten die einen Festgehalt von 25 Gew.-% besaß.

In Tabelle 2 wird eine Übersicht über die eingesetzten Diaminverbindungen und Tetracarbonsäuredianhydride gegeben.

Tabelle 2

Liste der Beispiele

| Nr. | Amin / Mol | | Anhydrid / Mol | | eingesetzte Carbonylverbindung |
|---|---|---|---|---|---|
| 6 | DADM | 0,6 | PMDA | 0,5 | Aceton |
| 7 | DADO | 0,6 | PMDA | 0,5 | Aceton |
| 8 | DADM | 0,6 | PMDA | 0,5 | Cyclohexanon |
| 9 | DADO | 0,6 | BPDA | 0,5 | Cyclohexanon |
| 10 | DADM | 0,5 | PMDA | 0,6 | Aceton |
| 11 | DADO | 0,5 | PMDA | 0,6 | Aceton |
| 12 | DADM | 0,5 | PMDA | 0,6 | Cyclohexanon |
| 13 | DADO | 0,5 | BPDA | 0,6 | Cyclohexanon |
| 14 | DADM | 0,6 | PMDA | 0,5 | - |
| 15 | DADO | 0,6 | PMDA | 0,5 | - |
| 16 | DADO | 0,6 | BPDA | 0,5 | - |
| 17 | DADM | 0,5 | PMDA | 0,6 | - |
| 18 | DADO | 0,5 | PMDA | 0,6 | - |
| 19 | DADO | 0,5 | BPDA | 0,6 | - |

Aus den Lösungen der Polymeren der Beispiele 6-19 wurden durch einfaches Mischen bei Raumtemperatur Blockcopolymere hergestellt. Es wurde so verfahren, daß jeweils zwei aus den Beispielen 6-19 erhaltene Lösungen, welche die zur Blockbildung geeigneten Polymeren enthielten, in Flaschen so eingewogen werden, daß das Gewichtsverhältnis der eingesetzten Lösungen 1 : 1 betrug. Die Mischungen a-m wurden vor der Prüfung zwei Tage auf dem Rollstuhl bewegt.

Tabelle 3

Erfindungsgemäße Polyamidsäuren

| Nr. | aminoterminierte bzw. halbaminal-terminierte Polyamidsäure aus Beispiel | anhydridterminierte Polyamidsäure aus Beispiel | Viskosit. [mPas] der Lösungen frisch | nach 30 Tagen/35°C | Schichtdicke max. ca. [μm] |
|---|---|---|---|---|---|
| a | 6 | 11 | 3260 | 3260 | 250 |
| b | 7 | 12 | 3430 | 3260 | 280 |
| c | 8 | 11 | 2800 | 2660 | 280 |
| d | 9 | 10 | 2850 | 2660 | 300 |
| e | 7 | 13 | 3660 | 2940 | >300 |
| f | 9 | 18 | 4680 | 4370 | 250 |
| g | 6 | 17 | 4960 | 5130 | 280 |
| h | 8 | 19 | 4370 | 4680 | 260 |

Tabelle 4

Nicht erfindungsgemäße Polyamidsäuren

| Nr. | aminoterminierte bzw. halbaminal-terminierte Polyamidsäure aus Beispiel | anhydridterminierte Polyamidsäure aus Beispiel | Viskosit. [mPas] der Lösungen frisch | nach 30 Tagen/35°C | Schichtdicke max. ca. [µm] |
|---|---|---|---|---|---|
| i | 14 | 18 | 6890 | 13980 | 60 |
| j | 15 | 17 | 7250 | 12450 | 75 |
| k | 15 | 19 | 5870 | 13980 | 45 |
| l | 14 | 19 | 6890 | 15430 | 60 |
| m | 16 | 17 | 5130 | 9600 | 80 |

Zur Prüfung der maximal möglichen Schichtdicke wurden von den Polyamidsäurelösungen a) bis m) auf

entfettete Stahlbleche mit Rakeln mit zunehmender Spalthöhe Schichten aufgerakelt und in einem Umluftofen 30 min bei 80°C, 30 min bei 120°C, 30 min bei 180°C , 30 min bei 250°C und 120 min bei 30°C eingebrannt.

Die mit einer Polyamidsäurelösung maximal erreichbare Schichtdicke ist ein Maß für das Filmbildevermögen der Lacke. Bei Auftragen höherer Schichtdicken entstehen Risse in den ausgehärteten Lacken.

Mit den nach dem erfindungsgemäßen Verfahren erhaltenen Polyamidsäuren a) bis h) ist die Auftragung deutlich größerer Schichtdicken möglich.

Gleichzeitig weisen die Lösungen der erfindungsgemäßen Polyamidsäuren bei gleichem Festgehalt wie die Lösungen der nicht erfindungsgemäßen Polyamidsäuren eine geringere Viskosität auf. Die erfindungsgemäßen Polyamidsäurelösungen sind lagerstabil (auch nach 30 Tagen ist kein Anstieg der Viskosität zu beobachten.

Die genannten Vorteile sind auch bei den Polyamidsäuren f, g und h deutlich zu erkennen, obwohl bei diesen erfindungsgemäßen Polyamidsäuren nur einer der Polyamidsäureblöcke nach dem erfindungsgemäßen Verfahren hergestellt wurde.

## Patentansprüche

1. Verfahren zur Herstellung von Polyamidsäuren und davon abgeleiteten Polyimiden dadurch gekennzeichnet, daß Tetracarbonsäuredianhydride mit Diaminen, die zumindest zu 10 % in der Halbaminalform vorliegen, zur Polyamidsäure umgesetzt werden.

2. Verfahren nach Anspruch 1, dadurch gekennzeichnet, daß die Halbaminale durch Umsetzung der Diamine mit einem $C_1$-$C_8$-Aldehyd oder -Keton als Lösungsmittel, gegebenenfalls in Gegenwart katalytischer Mengen Säure, erhalten werden und diese Lösung anschließend mit dem Tetracarbonsäuredianhydrid zur Polyamidsäure umgesetzt wird.

3. Verfahren nach Anspruch 1, dadurch gekennzeichnet, daß die Halbaminalbildung und weitere Umsetzung mit dem Tetracarbonsäuredianhydrid zur Polyamidsäure in einem Verfahrensschritt aus Diamin, Tetracarbonsäuredianhydrid und gegebenenfalls katalytischer Mengen Säure in einem $C_1$-$C_8$-Aldehyd oder -Keton als Lösungsmittel erfolgt.

4. Verfahren nach einem der Ansprüche 1 bis 3, dadurch gekennzeichnet, daß ein Lösungsmittel bzw. Lösungsmittelgemisch eingesetzt wird, das mindestens einen $C_1$-$C_8$-Aldehyd oder ein $C_1$-$C_8$-Keton in gelöster Form oder als Lösungsmittelbestandteil enthält, wobei auf 1 Mol Diamin zumindest 0,5 Mol des Aldehyds oder Ketons eingesetzt werden.

5. Verfahren nach einem der Ansprüche 1 bis 4, dadurch gekennzeichnet, daß die erhaltenen Polyamidsäuren vollständig oder teilweise, d.h. bis zum Erreichen eines bestimmten Imidierungsgrades, in die Polyimidendform überführt werden.

6. Lösungen von Polyamidsäuren, die sich aufbauen aus Einheiten, die sich ableiten von Tetracarbonsäuredianhydriden und Diaminen, dadurch gekennzeichnet, daß mindestens 1 % der Kettenenden in der Halbaminalform vorliegen.

7. Verwendung der Lösungen von Polyamidsäuren gemäß Anspruch 6 zum Beschichten von Oberflächen.

8. Verwendung von Polyamidsäuren und davon abgeleiteten Polyimiden gemäß Anspruch 1 zum Beschichten von Oberflächen.

## Claims

1. A process for preparing polyamide acids and polyimides derived therefrom, which comprises reacting tetracarboxylic dianhydrides with diamines, which are at least 10 % in the form of the hemiaminal, to give the polyamide acid.

2. A process as claimed in claim 1, wherein the hemiaminals are obtained by reacting the diamines with a $C_1$-$C_8$-aldehyde or -ketone as solvent, in the presence or absence of catalytic amounts of acid, and this

solution is then reacted with the tetracarboxylic dianhydride to give the polyamide acid.

3. A process as claimed in claim 1, wherein the formation of the hemiaminal and further reaction with the tetracarboxylic dianhydride to give the polyamide acid is carried out in one step with the diamine and tetracarboxylic dianhydride in a $C_1$-$C_8$-aldehyde or -ketone as solvent with or without catalytic amounts of acid.

4. A process as claimed in one of claims 1 to 3, wherein a solvent or solvent mixture which contains at least one $C_1$-$C_8$-aldehyde or $C_1$-$C_8$-ketone in dissolved form or as component of the solvent is employed, using not less than 0.5 mole of the aldehyde or ketone for 1 mole of diamine.

5. A process as claimed in any of claims 1 to 4, wherein the resulting polyamide acids are converted into the final polyimide form completely or partially, ie. until a particular degree of imidation is reached.

6. A solution of polyamide acids which are composed of units which are derived from tetracarboxylic dianhydrides and diamines, where not less than 1 % of the chain ends are in the form of hemiaminal.

7. The use of a solution of polyamide acids as claimed in claim 6 for surface coating.

8. The use of polyamide acids and polyimides derived therefrom as claimed in claim 1 for surface coating.

## Revendications

1. Procédé de préparation d'acides polyamidiques et de polyimides qui en dérivent, caractérisé en ce que l'on convertit des dianhydrides d'acides tétracarboxyliques avec des diamines qui se présentent à raison de jusqu'au moins 10% sous la forme d'hémiaminal, en acide polyamidique.

2. Procédé suivant la revendication 1, caractérisé en ce que l'on obtient les hémiaminals par la réaction des diamines avec une cétone en $C_1$ à $C_8$ ou un aldéhyde en $C_1$ à $C_8$ servant de solvant, éventuellement en présence de proportions catalytiques d'acide et on convertit ensuite cette solution en acide polyamidique avec le dianhydride d'acide tétracarboxylique.

3. Procédé suivant la revendication 1, caractérisé en ce que la formation de l'hémiaminal et la conversion subséquente avec le dianhydride d'acide tétracarboxylique en acide polyamidique s'effectue en une seule étape opératoire à partir de diamine, de dianhydride d'acide tétracarboxylique et éventuellement de quantités catalytiques d'acide, dans une cétone en $C_1$ à $C_8$ ou un anhydride en $C_1$ à $C_8$, servant de solvant.

4. Procédé suivant l'une quelconque des revendications 1 à 3, caractérisé en ce que l'on utilise un solvant ou un mélange de solvants, qui contient au moins un aldéhyde en $C_1$ à $C_8$ ou une cétone en $C_1$ à $C_8$, sous forme dissoute ou à titre de composant solvant, où on utilise au moins 0,5 mole de l'aldéhyde ou de l'acétone par mole de diamine.

5. Procédé suivant l'une quelconque des revendications 1 à 4, caractérisé en ce que l'on convertit les acides polyamidiques obtenus, totalement ou partiellement, c'est-à-dire jusqu'à ce que l'on parvienne à un degré d'imidation déterminé, en la forme finale polyimide.

6. Solutions d'acides polyamidiques qui se composent d'unités qui dérivent de dianhydrides d'acides tétracarboxyliques et de diamines, caractérisées en ce qu'au moins 1% des extrémités des chaînes se présentent sous forme d'hémiaminal.

7. Utilisation des solutions d'acides polyamidiques suivant la revendication 6 pour le revêtement de surfaces.

8. Utilisation d'acides polyamidiques et de polyimides qui en dérivent suivant la revendication 1, pour le revêtement de surfaces.